# EUROPEAN PATENT APPLICATION

(11) **EP 0 836 799 A1**
(43) Date of publication of application: **22.04.1998**
(21) Application number: 97201884.0
(22) Date of filing: 19.06.1997
(51) Int. Cl.: A01D 33/00, A01D 51/00, A01D 33/10, A01D 17/10

(54) **Buffer device**

(30) Priority: 21.10.1996 NL 1004326
(71) Applicant: Bijlsma Hercules B.V., 8801 JW Franeker (NL)
(72) Inventor: Bijlsma, Dirk Anne, 8801 JS Franeker (NL); Bijlsma, Jan, 8802 NZ Franeker (NL); Bax, Govert, 9104 HA Damwoude (NL)
(74) Representative: 't Jong, Bastiaan Jacobus

(57) **Abstract**

The present invention relates to a device for buffering agricultural products, such as potatoes, during transport. The device comprises a frame, a container connected to the frame and having a pouring opening for feed and an outfeed opening for discharge of the agricultural products, transporting means which lead in the container to the outfeed opening for transport of a flow of agricultural products, and a sieve which is connected to the transporting means for through-feed of the agricultural products and removal of dirt such as earth and stones from the flow. Between the transporting means and the sieve are arranged agitating means which in operation feed through the agricultural products and act thereon to displace them relative to each other in the flow.

## Description

The present invention relates to a device for buffering agricultural products, such as potatoes, during transport, comprising:
a frame; a container connected to the frame and having a pouring opening for feed and an outfeed opening for discharge of the agricultural products; transporting means which lead in the container to the outfeed opening for transport of a flow of agricultural products; and a sieve which is connected to the transporting means for through-feed of the agricultural products and removal of dirt such as earth and stones from the flow.

Such a device is generally known in the art, wherein the transporting means are directed inclining upward for transport of the agricultural products in substantially upward direction for direct discharge thereof onto the sieve.

The device according to the known art has the drawback that when the flow comprises, possibly temporarily, a large volume, for instance just after pouring in of a quantity of agricultural produce, this flow is such that the operation of the sieve is obstructed. The layers on the top of the flow of agricultural products are herein not subjected to the operation of the sieve and an unnecessarily large amount of dirt is carried along to for instance a store, when the present device forms an element in a succession of conveyors to such a store. The unnecessarily co-transported dirt can result in rotting of the agricultural products and in any case has the consequence that the flow continues to comprise a large volume whereby an unnecessarily large store is required and further conveyors in the succession toward the store must take a relatively heavy form.

The invention has for its object to obviate at least an above mentioned drawback and provides for this purpose a device which is distinguished in that between the transporting means and the sieve are arranged agitating means which in operation feed through the agricultural products and act thereon to displace them relative to each other in the flow.

In a device according to the present invention the agitating means bring about that the flow of agricultural produce for carrying to the sieve is uniform and limited, whereby the sieve can act thereon effectively. The agricultural products are moreover already cleaned somewhat by the action of the agitating means since dirt is thereby scraped from adjacent agricultural products because the agricultural products roll over each other.

In a preferred embodiment the agitating means are arranged at the highest position close to the top of the transporting means, so that the agricultural products coming from the transporting means are acted upon prior to being subjected to the operation of the sieve. A slightly downward movement from the transporting means via the agitating means and the sieve is herein effected under influence of the force of gravity, so that for this purpose no further steps are required for transport.

In a first embodiment a device according to the present invention comprises the step that the agitating means comprise at least one additional conveyor belt. The additional conveyor belt is herein preferably placed at a smaller angle of inclination than the upward directed conveyor belt, so that the flow of agricultural produce is curved at the transition between the conveyor belt and the additional conveyor belt and the flow of agricultural produce is agitated.

In a second embodiment a device according to the present invention comprises the step that the conveyor belt and the additional conveyor belt are designed as one conveyor belt forming a unit. It is possible herein to cause the conveyor belt and the additional conveyor belt to be moved with a single drive. In preference and in combination with the above mentioned curve in the flow, the device comprises the step in the second embodiment that the conveyor belt forming a unit contains at least one bend in the direction of forward movement of the flow.

In a third embodiment a device according to the present invention comprises the step that the agitating means are connected to adjusting means for adjusting the position thereof relative to the transporting means. In this manner the activity of the agitating means can be influenced, particularly in the case of agitating means designed as additional conveyor belt, and can be adjusted as desired. A device according to the third embodiment with an additional conveyor belt is herein preferably such that the additional conveyor belt is pivotally mounted connecting onto the conveyor belt, wherein substantially the end hereof directed to the sieve is connected to the adjusting means, wherein the activity of the agitating means is influenced by adjusting the pivot position of the additional conveyor belt relative to the conveyor belt. The adjusting means herein preferably comprise a drivable screw spindle.

In a fourth embodiment a device according to the present invention comprises the step of a drive for at least the transporting means and detection means connected to the drive for detecting the thickness of the flow in order to control a transport speed of the transporting means in accordance with this thickness. A greater thickness of the flow, a greater volume thereof, herein results for instance in a reduction of the transport speed in order to offer the flow of agricultural products sufficient opportunity to be converted by the agitating means to a uniform supply thereof to the sieve. A device in the fourth embodiment preferably comprises the step that the adjusting means are connected to the detection means for adjusting the position thereof in accordance with the thickness of the flow. It is also the case herein that the activity of the agitating means is thus made dependent on the volume in the flow of agricultural products.

The invention will be further elucidated hereinbelow with reference to an embodiment thereof. In the drawing:
- Fig. 1: shows a partly cut-away side view of a device according to the present invention;
- Fig. 2: shows a schematic side view of a detail of the device shown in fig. 1; and
- Fig. 3: shows schematic views of parts of the device shown in fig. 1 in separate operating positions thereof.

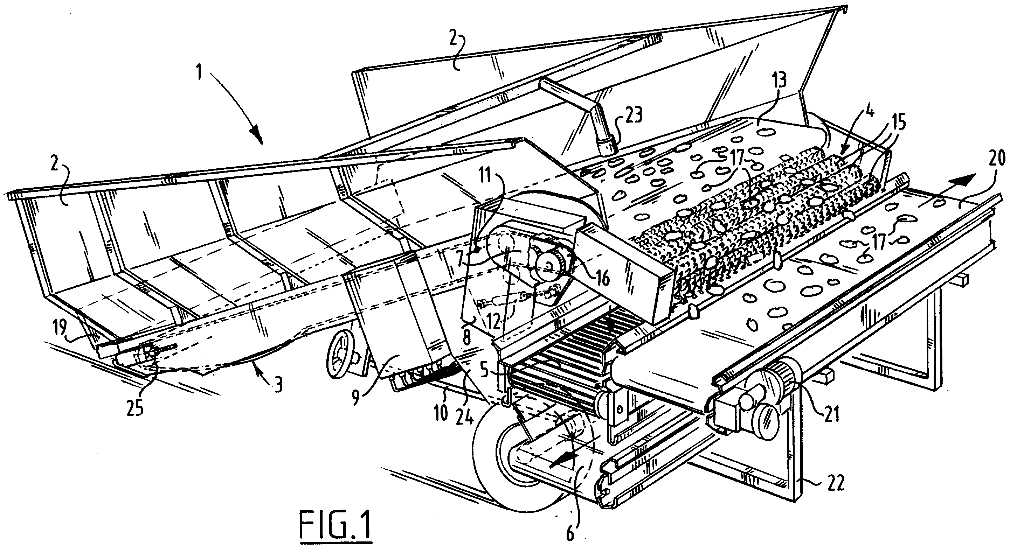

Fig. 1 shows a device according to the present invention designed as container 1 wherein transporting means designed as conveyor belt 3 form a bottom of container 1 and walls 2 on either side of conveyor belt 3 complete the container 1. Conveyor belt 3 herein comprises a motor casing 8, a power supply 9 connected to the motor casing, a transmission 7 connected to motor casing 8, a reversing wheel 16 as part of transmission 7 and a belt 13 trained round the driven reversing wheel 16 and an oppositely lying free-running reversing wheel 25.

In the embodiment shown here conveyor belt 3 has a bend close to a tilting point 11, round which tilting point 11 can tilt a part of conveyor belt 3 of which motor casing 8 and transmission 7 also form part. Due to the bend in conveyor belt 3 close to tilting point 11 the upward directed flow of potatoes 17 is broken after a quantity of potatoes has been poured in at the partition 19 on the left-hand side in the figure which holds these potatoes 17 in container 1. By breaking the flow of potatoes close to tilting point 11 the potatoes roll over each other and a large amount of the dirt adhering to the potatoes is already scraped therefrom by the agitating and breaking of the flow of potatoes prior to the influence of a sieve placed after conveyor belt 3 in the transporting direction. The tiltable part of conveyor belt 3 therefore forms the agitating means.

The angle of the part of conveyor belt 3 tiltable round tilting point 11 is adjustable using a drivable screw spindle 12. The activity of the agitating means can be adjusted herewith on the basis of the direction of the part of conveyor belt 3 tiltable round tilting point 11 and the bend thus formed close to tilting point 11 in conveyor belt 3. It should be noted here that instead of screw spindle 12 other means per se known in the art can likewise be used, such as a hydraulic cylinder or the like.

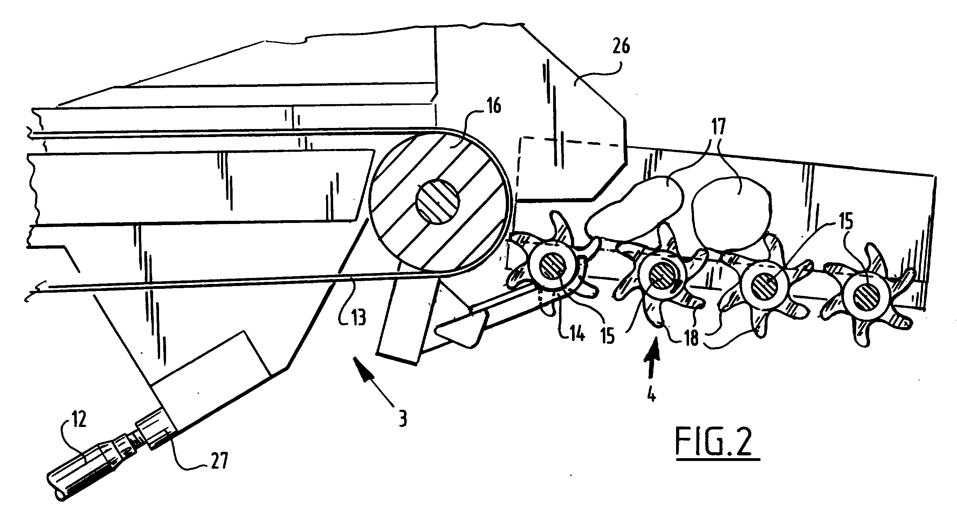

The flow of potatoes 17 which is broken at tilting point 11 is carried to sieve 4 in a flow with a uniform and limited thickness, wherein sieve 4, as will be further described hereinbelow, also displays an additional scraping action for removing dirt from potatoes 17. For this purpose rollers 15 are arranged transversely of the direction of movement of the flow of potatoes 17. The rollers are herein designed as star shafts 15, as shown more clearly in fig. 2. Star shafts 15 are placed at a mutual distance, wherein this distance is adjustable using the screw spindle 10. A larger or smaller distance is set between the star shafts 15 by turning screw spindle 10, wherein a desired preferred distance depends substantially on the type of potato and the soil type from which these potatoes come. The sieve 4 containing star shafts 15 forms a part of the device which is separate from conveyor belt 3 but which is coupled to the part of conveyor belt 3 tiltable on tilting point 11 such that connection between this part of conveyor belt 3 and the sieve is maintained irrespective of the adjustment of screw spindle 12, so that no potatoes can be lost and can be discharged as unwanted dirt by means of a sieve chain 5 or a dirt discharge belt 6. The flow of potatoes agitated at the bend in conveyor belt 3 and subjected to a sieving process at sieve 4 is then ready for further transport to for instance a store, this being effected with a conveyor 20 running transversely of the flow of potatoes, with which or via which conveyor the potatoes 17 are transported to for instance a barn. This conveyor 20 is here supported by a part 22 of frame 24 and is driven by a motor 21 which is also mounted on the frame.

The container 1 shown here is further provided with a sensor 23 in the inside thereof for detecting the thickness of the flow of potatoes 17 moving past here. The sensor is fixed to an arm connected to the wall 2. The motor 8 is herein adapted to modify the speed at which belt 13 is moved to the detected thickness of the flow. In order to give a thick flow of potatoes an opportunity to break sufficiently over tilting point 11, the speed can thus be lowered. Additionally or alternatively-it is also possible that a separate drive (not shown) for screw spindle 12 is arranged, which drive is connected to the sensor in order to vary the position of the part of conveyor belt 3 tiltable round tilting point 11 in similar manner subject to the thickness of the flow.

Shown in fig. 2 is a part of the device according to the present invention shown in fig. 1 and designed as container 1.

Belt 13 is herein trained round the driven reversing wheel 16, wherein reversing wheel 16 is connected for driving thereof to transmission 7. A housing 26 substantially contains transmission 7 and reversing wheel 16. This housing 26 is however also engaged by the screw spindle 12 at the tiltable mounting point 27. Herewith the position of the housing, and therefore of the part of conveyor belt 3 tiltable round tilting point 11, can be adjusted in order to bring about the above described operation of the agitating means.

Sieve 4 is connected by means of a releasable hook 14 to housing 26 in order to maintain connection thereof to sieve 4, even after changing of the position of housing 26.

The sieve here comprises star shafts 15 which are each formed by a succession of star-shaped members with fingers 18, which fingers are preferably manufactured from a soft material, such as rubber, so that when star shafts 15 are rotated the potatoes 17 are passed from the one star shaft 15 to the other in the transport direction of the potatoes over sieve 4.

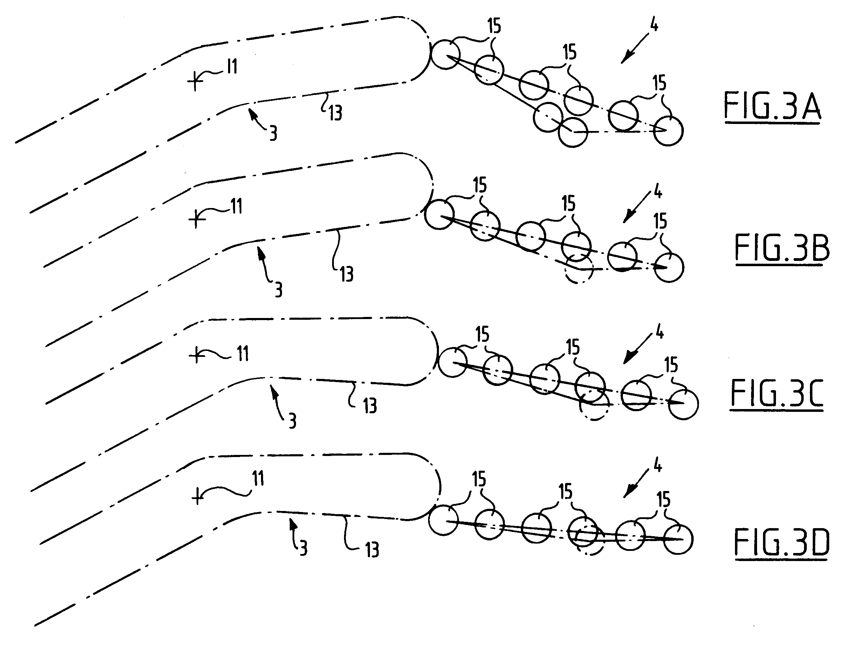

Fig. 3A-3D show a number of positions of the stationary part of the conveyor belt, the tiltable part of conveyor belt 3 and sieve 4.

The non-tiltable part of conveyor belt 3 is situated at an angle of 27° to the horizontal for each of the situations shown in fig. 3A to 3D. In fig. 3A and 3B the part of conveyor belt 3 tiltable on tilting point 11 is placed at an angle of 8.5°, while in fig. 3C and 3D the tiltable part of conveyor belt 3 is placed in an exactly horizontal position. Sieve 4 connects in each of the cases shown in fig. 3A to 3D onto the end of conveyor belt 3 to collect potatoes falling therefrom and subject them to the sieving action thereof. Depending on the desired operation of sieve 4, it is possible to cause the sieve 4 to connect in line to the conveyor belt or to cause some difference in height to occur herein by adjusting the hook 14 which is explicitly shown in fig. 2.

The choice between these two positions of the hook 14 likewise depends on the resistance of the potatoes to such a difference in height and the free fall associated therewith, and therefore depends on the type of potatoes 17 being handled here. Similar considerations relating to height differences apply to the end of the sieve on the side located opposite conveyor belt 3, where potatoes 17 fall onto conveyor 20 as shown in fig. 1, which conveyor is driven with the motor mounted on a support profile designed as part of frame 24 in order to discharge potatoes 17 to for instance a barn.

## Claims

1. Device for buffering agricultural products, such as potatoes, during transport, comprising:
- a frame;
- a container connected to the frame and having a pouring opening for feed and an outfeed opening for discharge of the agricultural products;
- transporting means which lead in the container to the outfeed opening for transport of a flow of agricultural products; and
- a sieve which is connected to the transporting means for through-feed of the agricultural products and removal of dirt such as earth and stones from the flow, **characterized in that** between the transporting means and the sieve are arranged agitating means which in operation feed through the agricultural products and act thereon to displace them relative to each other in the flow.

2. Device as claimed in claim 1, wherein the transporting means are placed inclining upward in the container in the transport direction thereof, **characterized in that** the agitating means are arranged at the highest position close to the top of the transporting means.

3. Device as claimed in claim 1 or 2, wherein the transporting means comprise a conveyor belt, **characterized in that** the agitating means comprise at least one additional conveyor belt.

4. Device as claimed in claims 2 and 3, **characterized in that** the additional conveyor belt is placed at a smaller angle of inclination than the upward directed conveyor belt.

5. Device as claimed in claim 3 or 4, **characterized in that** the conveyor belt and the additional conveyor belt are designed as one conveyor belt forming a unit.

6. Device as claimed in claim 5, **characterized in that** the conveyor belt forming a unit contains at least one bend in the direction of forward movement of the flow.

7. Device as claimed in any of the foregoing claims, **characterized in that** the agitating means are connected to adjusting means for adjusting the position thereof relative to the transporting means.

8. Device as claimed in claim 7 and any of the claims 3-6, **characterized in that** the additional conveyor belt is pivotally mounted connecting onto the conveyor belt, wherein substantially the end thereof directed to the sieve is connected to the adjusting means.

9. Device as claimed in claim 8, **characterized in that** the adjusting means comprise a drivable screw spindle.

10. Device as claimed in any of the foregoing claims, **characterized by** a drive for at least the transporting means and detection means connected to the drive for detecting the thickness of the flow in order to control a transport speed of the transporting means in accordance with this thickness.

11. Device as claimed in claim 10, **characterized in that** the adjusting means are connected to the detection means for adjusting the position thereof in accordance with the thickness of the flow.

12. Device as claimed in any of the foregoing claims, **characterized in that** the sieve comprises one mechanism from the group of spirals, cylinders and rollers for rotatable driving and having star-shaped discs and the like extending in radial direction thereof.

13. Device as claimed in at least claims 6 and 8, **characterized in that** a drive for the transporting means is arranged in the pivotable part of the transporting means.
